# NEUE EUROPÄISCHE PATENTSCHRIFT

(11) **EP 2 142 398 B2**
(45) Veröffentlichungstag und Bekanntmachung des Hinweises auf die Entscheidung über den Einspruch: **06.04.2016**
(45) Hinweis auf die Patenterteilung: 26.09.2012
(21) Anmeldenummer: 08734906.4
(22) Anmeldetag: 31.03.2008
(51) Int. Cl.: B60N 2/50

(54) **FAHRZEUGSITZ MIT GETEILTER RÜCKENLEHNE**
VEHICLE SEAT COMPRISING A PARTITIONED BACK REST
SIÈGE DE VÉHICULE À DOSSIER EN PLUSIEURS PARTIES

(30) Priorität: 03.04.2007 DE 102007016379; 14.09.2007 DE 102007044096
(43) Veröffentlichungstag der Anmeldung: 13.01.2010
(73) Patentinhaber: Johnson Controls GmbH, 51399 Burscheid (DE)
(72) Erfinder: FUNK, Stefan, 42799 Leichlingen (DE); ALBERS, Franz, 51109 Köln (DE); ABRAHAM, James, 51147 Köln (DE); ENGELS, Bernd, 42897 Remscheid (DE)
(74) Vertreter: Wolff, Felix
(86) Internationale Anmeldenummer: PCT/EP2008/002548
(87) Internationale Veröffentlichungsnummer: WO 2008/119538

(56) Entgegenhaltungen:
- EP-A- 1 186 469
- EP-B1- 1 051 931
- DE-A1-102004 011 137
- DE-A1-102004 062 944
- DE-C1- 4 405 397
- DE-C1- 10 223 792
- DE-C1- 19 735 253
- JP-A- S59 130 746

## Beschreibung

Die Erfindung betrifft einen Fahrzeugsitz mit einem Sitzteil und einer geteilten Rückenlehne, die ein erstes Segment und ein zweites Segment aufweist, wobei diese Segmente jeweils mit einem Neigungsversteller versehen sind.

Die gattungsgemäßen Fahrzeugsitze sind aus dem Stand der Technik, beispielsweise der DE 198 19 776 oder der EP-A-1186469 bekannt. Die dort beschriebenen Fahrzeugsitze weisen jedoch oftmals Sicherheitsmängel auf und oder können in einer nicht vorgesehenen Weise benutzt werden.

Es war deshalb die Aufgabe der vorliegenden Erfindung, die Sicherheit derartiger Fahrzeugsitze, insbesondere Rücksitzbänke, zu verbessern und eine Fehlbenutzung zu vermeiden.

Gelöst wird die Aufgabe mit einem Fahrzeugsitz mit einem Sitzteil und einer geteilten Rückenlehne, die ein erstes Segment und ein zweites Segment aufweist, wobei diese Segmente jeweils mit einem Neigungsversteller versehen sind und er ein Mittel aufweist, das die Neigung des einen Segmentes relativ zu dem anderen Segment einschränkt.

Erfindungsgemäß weist der Fahrzeugsitz einen Sitzteil und eine Rückenlehne auf. Während der Sitzteil einteilig oder geteilt sein kann, ist die Rückenlehne in ein erstes und ein zweites Segment geteilt. Beide Segmente sind jeweils mit einem Neigungsversteller versehen, mit dem das jeweilige Segment in seinem Winkel relativ zu dem Sitzteil verstellbar ist. Diese Verstellung kann zur Verbesserung des Komforts der Fahrzeuginsassen und/oder zur Verstellung des jeweiligen Segmentes von einer Gebrauchs- in eine Verstaustellung eingesetzt werden. In der Gebrauchsstellung, in der die Rückenlehne im wesentlichen senkrecht steht, kann ein Fahrgast im Bereich des jeweiligen Segmentes auf dem Sitzteil platznehmen. In der Verstaustellung ist das jeweilige Segment im wesentlichen parallel zu dem Sitzteil angeordnet und dieser Bereich des Fahrzeugsitzes kann dann als Stauraum und/oder als Durchlademöglichkeit eingesetzt werden. Die Neigungsverstellung kann sowohl in Richtung des Sitzteil d.h. in der Regel in Fahrrichtung als auch von dem Sitzteil weg also in der Regel entgegen der Fahrtrichtung gerichtet sein.

Weiterhin erfindungsgemäß weist der Fahrzeugsitz ein Mittel auf, das die Neigung mindestens eines Segmentes relativ zum anderen Segment einschränkt, d.h. das eine Segment kann nur in einem beschränkten Maß anders geneigt sein als das andere Segment.

Der erfindungsgemäße Fahrzeugsitz ist wesentlich sicherer als Fahrzeugsitze gemäß dem Stand der Technik, weil es beispielsweise nicht möglich ist, dass sich ein Segment des Fahrzeugsitzes in der Gebrauchsstellung befindet und damit von einem Fahrzeuginsassen belegbar ist, während sich das andere Sitzsegment, an dem beispielsweise sicherheitsrelevante Bauteile angeordnet sind, in der Verstaustellung befindet und diese Bauteile somit nicht zur Verfügung stehen. Das Mittel sorgt insbesondere dafür, dass eine Verstellung des jeweiligen Rückenlehnensegmentes zur Verbesserung des Komforts unabhängig voneinander möglich ist, dass jedoch ein Segment nur gemeinsam mit dem anderen Segment von der Gebrauchs- in die Verstaustellung und umgekehrt verbringbar ist.

Erfindungsgemäß verhindert das Mittel demnach, dass sich das erste Segment in einer Gebrauchs- und das zweite Segment in einer Verstaustellung befindet.

Als Neigungsversteller kommen alle dem Fachmann bekannten Neigungsversteller, mit denen die Neigung einer Rückenlehne relativ zu einem Sitzteil verstellbar ist, infrage. Erfindungsgemäß arbeiten alle Neigungsversteller des erfindungsgemäßen Fahrzeugsitzes nach dem Rastklinkenprinzip. Erfindungsgemäß weist jedes Rückenlehnensegment einen Neigungsversteller auf, der sich besonders bevorzugt an einer Seite des jeweiligen Segmentes befindet. Beabstandet davon weist jedes Rückenlehnensegment zusätzlich noch ein weiteres Lagerungsmittel, beispielsweise ein Gelenk auf, mit dem es zusätzlich an dem Sitzteil oder an der Fahrzeugkarosserie gelagert ist. Es ist jedoch auch denkbar, dass das jeweilige Rückenlehnensegment mit zwei Neigungsverstellern, die rechts und links an dem Rückenlehnensegment angeordnet sind, an dem Sitzteil oder der Fahrzeugkarosserie gelagert ist.

Erfindungsgemäß weisen die Neigungsversteller jeweils einen rückenlehnenseitigen Beschlag auf, an dem jeweils ein Formschlussmittel angeordnet ist, die zueinander komplementär gestaltet sind. Das Formschlussmittel des einen Beschlages wirkt mit dem Formschlussmittel des anderen Beschlages so zusammen, dass sie die Bewegung des einen Beschlags relativ zu dem anderen Beschlag einschränken. Mindestens ein Formschlussmittel des einen Beschlages ist jedoch so gestaltet, dass das komplementäre Formschlussmittel des anderen Beschlages ein gewisses Spiel hat, bevor diese formschlüssig miteinander zusammenwirken. Insbesondere handelt es sich bei dem einen Formschlussmittel um einen Vorsprung, der in eine Ausnehmung eingreift, wobei vorzugsweise die Ausnehmung größer gestaltet ist als der Vorsprung, so dass diese in einem gewissen Maß relativ zueinander bewegbar sind, bevor sie zusammenwirken und dann in eine Richtung nur noch gemeinsam bewegt werden können.

Erfindungsgemäß sind die Formschlussmittel an Ringvorsprüngen angeordnet.

In einer bevorzugten Ausführungsform ist an dem zweiten Segment ein Gurt befestigt, mit dem ein Fahrzeuginsasse, der im Bereich des ersten Segmentes sitzt, anschnallbar ist. Bei dieser bevorzugten Ausführungsform verhindert das Mittel, dass das erste Rückenlehnensegment des ersten Sitzbereichs - vom Insassen gesehen - hinter das zweite Rückenlehnensegment mit der Gurtrolle einstellbar ist, weil dann eine ausreichende Funktion des Gurtes gefährdet ist.

Vorzugsweise ist der Fahrzeugsitz eine Sitzbank, die mehreren Fahrzeuginsassen Platz bietet. Besonders bevorzugt handelt es sich bei der Sitzbank um eine Rückbank, die hinter dem Fahrer- und Beifahrersitz angeordnet ist.

Vorzugsweise weist die Sitzbank eine Rückenlehne mit einem größeren und einem kleineren Teil auf. Beispielsweise handelt es sich um eine 60%/40%- oder 2/3- zu 1/3-teilung. Besonders bevorzugt sind das erste und zweite Segmente Teile des größeren Teils. Besonders bevorzugt ist die Rückenlehne dreigeteilt, insbesondere in zwei größere und ein kleineres Teil, wobei sich ganz besonders bevorzugt das kleinere Teil zwischen den größeren Teilen befindet. Beispielsweise handelt es sich um eine 20-40-20 Teilung.

Weiterhin wird offenbart ein Fahrzeugsitz, der ein Mittel aufweist, das eine Verriegelung des Neigungsverstellers nur dann zulässt, wenn dieser sich in einer bestimmten Position relativ zu dem Neigungsversteller befindet.

Durch diese Ausführungsform ist sichergestellt, dass ein Segment beispielsweise einer Rückenlehne in einer Position verriegelbar ist, in der sie ein Sicherheitsrisiko darstellt.

Vorzugsweise nehmen die Neigungsversteller für die Verriegelung dieselbe Stellung ein; d.h. sie befinden sich vorzugweise in der Verstau- oder in der Gebrauchsposition.

Vorzugsweise handelt es sich bei den Neigungsverstellern um den Neigungsversteller eines Mittelsegmentes und eines Randsegmentes einer Rückenlehne.

Erfindungsgemäß weist der Fahrzeugsitz ein Mittel auf, das eine Verriegelung des Neigungsverstellers nur dann zulässt, wenn dieser sich in einer bestimmten Position relativ zu dem Neigungsversteller befindet. Vorzugsweise handelt es sich bei dem Mittel um eine Rampe, das die Verriegelung verhindert, so lange die Stellung des entsprechenden Neigungsverstellers nicht der gewünschten Position entspricht.

Vorzugsweise wirkt die Rampe mit einem Steuermittel zusammen. Vorzugsweise bewegt sich das Steuermittel entlang der Rampe, bis die gewünschte Position erreicht ist. In dieser Position oder kurz davor macht das Steuermittel dann eine Steuerbewegung, die die Verriegelung des jeweiligen Neigungsverstellers erlaubt.

Vorzugsweise wirkt das Steuermittel auch verriegelnd mit der Rampe zusammen.

Im folgenden wird die Erfindung anhand der Figuren 1 - 4 erläutert. Diese Erläuterungen sind lediglich beispielhaft und schränken den allgemeinen Erfindungsgedanken nicht ein.
- **Figur 1**: zeigt den erfindungsgemäßen Fahrzeugsitz als Rücksitzbank.
- **Figur 2**: zeigt die Lagerung der Segmente der Rückenlehne
- **Figur 3**: zeigt ein Detail der Lagerung gemäß Figur 2
- **Figuren 4a und 4b**: zeigen das Mittel zur Einschränkung der Neigung des ersten Segmentes
- **Figur 5**: zeigt eine weitere, nicht zur Erfindung gehörende Ausführungsform des erfindungsgemäßen Fahrzeugsitzes.
- **Figur 6**: zeigt die beiden Neigungsversteller der Figur 5 mit einer dazwischenliegenden Rampe.

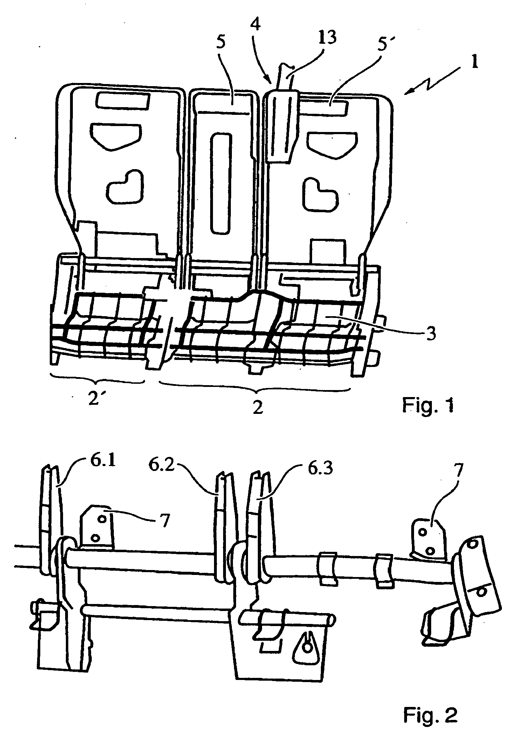

Die in Figur 1 dargestellte Rücksitzbank 1 ist insgesamt in ein linkes 60%-Teil 2 und ein rechtes 40%-Teil 2' gegliedert, die völlig unabhängig voneinander in ihrer Neigung und Längsposition im Fahrzeug verstellbar sind. Das Teil 2' bleibt nachfolgend außer Betracht. Die Rücksitzbank kann von Fahrzeuginsassen benutzt werden, so dass sich die Rückenlehnen in der sogenannten Gebrauchsstellung befinden.

Das 60%-Teil 2 weist ein durchgehendes 60%-Sitzteil 3 und eine Rücken lehne 4 auf, die ihrerseits in ein mittig in der Rücksitzbank 1 angeordnetes erstes 20%-Rückenlehnensegment 5 und ein linkes zweites 40%-Rückenlehnensegment 5' geteilt ist. Dabei ist an der rechten Oberkante des Rückenlehnensegments 5' eine Gurtrolle 13 für einen Insassen befestigt, welcher im Bereich des mittleren ersten Rückenlehnensegments 5 Platz nimmt. Die Rückenlehnensegmente 5, 5' können in ihrer Neigung relativ zum Sitzteil 3 wie auch zueinander verstellt werden. Dadurch kann der Komfort der Insassen erhöht werden. Es ist jedoch auch die Möglichkeit geschaffen, das mittlere erste Rückenlehnensegment 5 zur Schaffung einer Durchlademöglichkeit auf das Sitzteil 3 zu klappen, so dass sich dieses Rückenlehnensegment in der sogenannten Verstaustellung befindet. Aber auch das zweite Rückenlehnensegment 5 kann gegebenenfalls auf das Sitzteil geklappt werden. Hierzu sind, wie in Figur 2 zu sehen ist, Neigungsversteller 6.2 an der rechten Seite des Rückenlehnensegmentes 5 und beabstandet davon im Bereich der linken Seite des ersten Rückenlehnensegmentes 5 ein Gelenk 7 für das mittlere Rückenlehnensegment 5 sowie ein Neigungsversteller 6.3 an der linken Seite des zweiten Rückenlehnensegmentes 5' und beabstandet ein rechtes seitliches Gelenk 7 für das Rückenlehnensegment 5' vorgesehen. Der gleichfalls dargestellt Neigungsversteller 6.1 gehört zum nicht erfindungsrelevanten 40%-Teil 2'. (Fig. 2). Alle Neigungsversteller 6.1 bis 6.3 arbeiten erfindungsgemäß nach dem Rastklinkenprinzip.

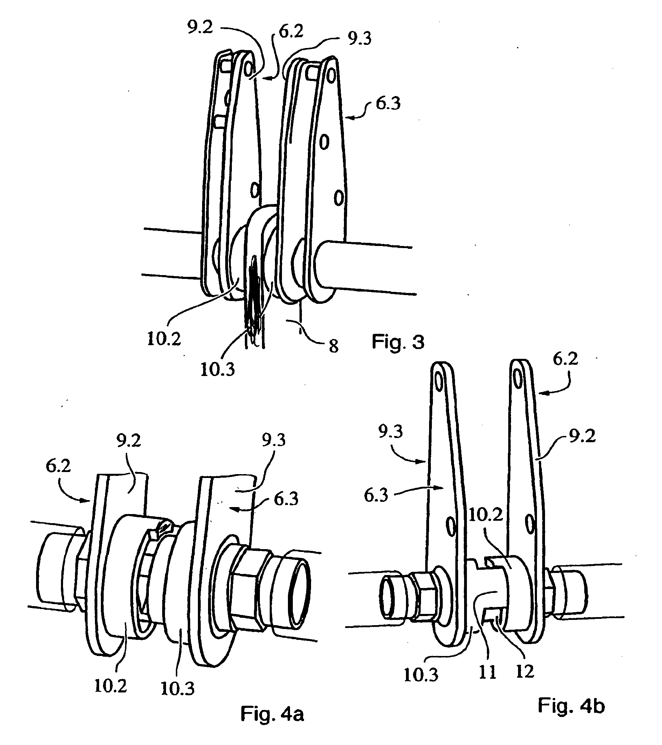

Wie aus Figur 3 ersichtlich, sind die Neigungsversteller 6.2 und 6.3 beidseits einer Lasche 8 zur Befestigung am Fahrzeugboden angeordnet und weisen an ihren lehnenseitigen Beschlagplatten 9.2, 9.3 aufeinander zuweisende Ringvorsprünge 10.2, 10.3 auf, die mit mindestens einem klauenartigen axialen Fortsatz 11, der hier an einem Ringvorsprung 10.3 angeordnet ist, ausgestattet ist. Dieser greift in mindestens eine komplementäre axiale Ausnehmung 12, der hier an dem gegenüberliegenden Ringvorsprungs 10.2 angeordnet ist, ein, so dass die Ringsprünge 10.2, 10.3 und damit auch die Rückenlehnensegmente 5, 5' in ihrer Verschwenkbarkeit zueinander eingeschränkt sind. Figur 4a ist eine Ansicht von vorne; Figur 4b eine Ansicht von hinten. Insbesondere wird hierdurch ausgeschlossen, dass das seitliche Rückenlehnensegment 5 bei aufrecht stehendem Rückenlehnensegmenten 5 auf das Sitzteil 3 geklappt werden kann, wodurch einem Sitzinsassen im Bereich des mittleren Rückenlehnensegments 5 kein Sicherheitsgurt mehr zur Verfügung stünde. Insbesondere in den Figuren 4a und 4b ist auch zu erkennen, dass der Fortsatz 11 eine gewisses Spiel in der Ausnehmung 12 hat, so dass die Beschläge 9.2, 9.3 auch in einem gewissen Umfang unabhängig voneinander verstellbar sind. Dies ist insbesondere für die Komfortverstellung der beiden Rückenlehnensegmente 5, 5' wichtig. Der Fachmann erkennt, dass an den Beschlagplatten mehrere Fortsätze 11 und mehrere Ausnehmungen 12 angeordnet sein können.

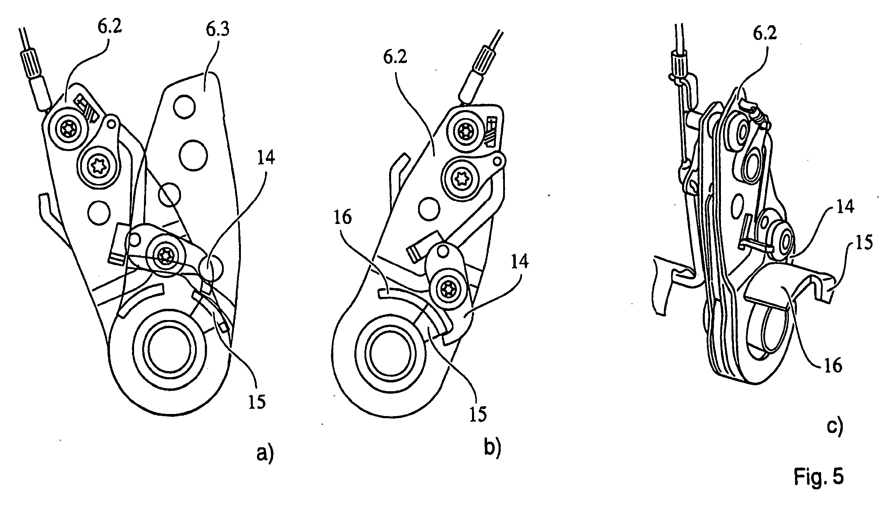

Figur 5 zeigt eine weitere nicht zur Erfindung gehörende Ausführungsform des Fahrzeugsitzes. Zu sehen sind zwei Neigungsversteller 6.2, 6.3, mit denen jeweils die Neigung eines unterschiedlichen Rückenlehnensegmentes verstellt werden können. In dem vorliegenden Fall ist der Neigungsversteller 6.2 an einem in der Mitte angeordneten 20%-Segment angeordnet, während der Neigungsversteller 6.3 zu einem seitlich daneben liegenden Rückenlehnensegment gehört. In der linken Darstellung 5a befindet sich der Neigungsversteller 6.2 vor dem Neigungsversteller 6.3; d.h. ist beispielsweise in Richtung der Sitzfläche verschwenkt. In dieser Position kann der Neigungsversteller 6.2 nicht verriegelt werden. Die Verriegelung wird durch ein Steuermittel 14 verhindert, das drehbar an dem Neigungsversteller 6.2 angeordnet und im Uhrzeigersinn drehend vorgespannt ist. Ein Ende dieses Steuermittels 14 wirkt mit einer an dem Neigungsversteller 6.3 direkt oder indirekt angeordneten Rampe 15 zusammen, die verhindert, dass sich das Steuermittel 14 im Uhrzeigersinn dreht. An seinem der Rampe 15 abgewandten anderen Ende ist das Steuermittel 14 mit einer Mimik verbunden, die verhindert, dass ein nicht dargestelltes Rastmittel den Neigungsversteller 6.2. verriegelt. In der Figur 5b ist der Neigungsversteller 6.2 so im Uhrzeigersinn verdreht worden, dass seine Position mit dem Neigungsversteller 6.3. synchronisiert worden ist. In dieser Position darf nunmehr der Neigungsversteller 6.2 verriegelt werden. Dies wird dadurch erreicht, das das Steuermittel 14, sobald es das Ende der Rampe 15 erreicht hat, eine Steuerbewegung, in dem vorliegenden Fall eine Drehbewegung im Uhrzeigersinn, vollführt. Die ebenfalls an dem Steuermittel 14 angeordnete Mimik, die bei der Steuerbewegung mitbewegt wird, bewirkt entweder die Verriegelung des Neigungsverstellers 6.2 selbst oder gibt eine Verriegelungsmimik frei. Des Weiteren ist in Figur 5b zu erkennen, dass an dem Neigungsversteller 6.2 ein Anschlag 16 angeordnet ist, der an die Rampe 15 anschlägt. Des Weiteren ist zu erkennen, dass das Steuermittel 14 nicht nur ein Steuermittel sondern auch ein Verriegelungsmittel ist, dessen Spitze verriegelnd mit der Rampe 15 zusammen wirkt. Durch den Anschlag 16 wird eine Drehbewegung des Neigungsverstellers 6.2 im Uhrzeigersinn und durch das Verriegelungsmittel 14 eine Drehbewegung des Neigungsverstellers 6.2. relativ zum Neigungsversteller 6.3 gegen den Uhrzeigersinn verhindert. Im rechten Teil der Figur 5 ist noch einmal der Neigungsversteller 6.2 in einer perspektivischen Ansicht dargestellt. Des Weiteren sind der Anschlag 16, das Steuermittel 14 sowie die an dem Neigungsversteller 6.3 angeordneten Rampe 15 zu sehen.

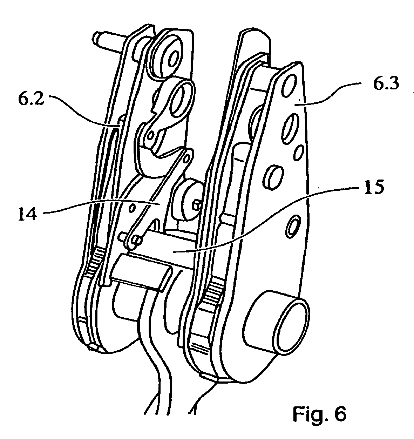

Figur 6 zeigt die beiden Neigungsversteller in einer perspektivischen Ansicht. Erkennbar ist, dass zwischen den beiden Neigungsverstellern 6.2. und 6.3 eine Rampe 15 angeordnet ist. Des Weiteren ist Figur 6 das Steuermittel 14 zu sehen, das in dieser Darstellung auch eine Drehmomentenübertragung von dem Neigungsversteller 6.2 auf den Neigungsversteller 6.3 erlaubt.

### Bezugszeichenliste:

- 1: Rücksitzbank
- 2,2: Teil (des Sitzes)
- 3: Sitzteil
- 4: Rückenlehne
- 5: erstes Rückenlehnensegment, erstes Segment, Segment
- 5': zweites Rückenlehnensegment, zweites Segment, Segment
- 6.1 bis 6.3: Neigungsversteiler
- 7: Lagerungsmittel, Gelenk
- 8: Lasche
- 9.2, 9.3: Beschlag, Beschlagplatte
- 10.2, 10.3: Ringvorsprung
- 11: Fortsatz
- 12: Ausnehmung
- 13: Gurt, Gurtrolle
- 14: Steuermittel
- 15: Rampe
- 16: Anschlag

## Patentansprüche

1. Fahrzeugsitz (1) mit einem Sitzteil (3) und einer geteilten Rückenlehne (4), die ein erstes Segment (5) und ein zweites Segment (5) aufweist, wobei diese Segmente (5, 5') jeweils mit einem Neigungsversteller (6.1 , 6.2) versehen sind, **dadurch gekennzeichnet, dass** er ein Mittel (11 , 12) aufweist, das die Neigung des einen Segmentes (5') relativ zum anderen Segment (5) einschränkt, so dass eine Verstellung des jeweiligen Segments (5, 5') zur Verbesserung des Komforts unabhängig voneinander möglich ist, dass jedoch ein Segment (5) nur gemeinsam mit dem anderen Segment (5') von einer Gebrauchsstellung in eine Verstaustellung und umgekehrt verbringbar ist, wobei die Neigungsversteller (6.1, 6.2) nach dem Rastklinkenprinzip arbeiten, wobei die Neigungsversteller (6.1, 6.2) beidseits einer Lasche (8) zur Befestigung am Fahrzeugboden angeordnet sind, wobei die Neigungsversteller (6.1, 6.2) rücklehnenseitige Beschlagplatten (9.2, 9.3) mit aufeinander zuweisenden Ringvorsprüngen (10.2, 10.3) aufweisen, wobei ein Ringvorsprung (10.3) einen klauenartigen axialen Fortsatz (11) aufweist, welcher in eine komplementäre axiale Ausnehmung des gegenüberliegenden Ringvorsprungs (10.2) eingreift, wobei der Fortsatz (11) ein gewisses Spiel in der Ausnehmung (12) hat, so dass die Beschlagplatten (9.2, 9.3) in einem gewissen Umfang unabhängig voneinander verstellbar sind.

2. Fahrzeugsitz nach Anspruch 1 , **dadurch gekennzeichnet, dass** das Mittel (11, 12) verhindert, dass sich das erste Segment (5) in einer Gebrauchs- und das zweite Segment (5') in einer Verstaustellung befindet.

3. Fahrzeugsitz nach einem der voranstehenden Ansprüche, **dadurch gekennzeichnet, dass** an dem Segment (5') ein Gurt (13) befestigt ist, mit dem ein Fahrzeuginsasse, der an das Segment (5) gelehnt ist, anschnallbar ist.

4. Fahrzeugsitz nach einem der voranstehenden Ansprüche, **dadurch gekennzeichnet, dass** es eine Sitzbank ist.

5. Fahrzeugsitz nach Anspruch 4, **dadurch gekennzeichnet, dass** die Sitzbank eine Rückenlehne mit einer Teilung in einen grösseren Teil (2) und einen kleineren Teil (2') aufweist.

6. Fahrzeugsitz nach Anspruch 5, **dadurch gekennzeichnet, dass** die Segmente (5, 5') Teile des grösseren Teils (2) sind.

## Claims

1. Vehicle seat (1) comprising a seat part (3) and a partitioned back rest (4) which comprises a first segment (5) and a second segment (5'), said segments (5, 5') being each equipped with an inclination adjuster (6.1, 6.2), **characterized in that** it has a means (11, 12) that limits the inclination of the one segment (5') relative to the other segment (5), with the result that an adjustment of the respective segment (5, 5') in order to improve the comfort is possible independently of one another, but **in that** one segment (5) can be moved from a use position into a stowage position and vice versa only together with the other segment (5'), the inclination adjusters (6.1, 6.2) operating according to the latching pawl principle, the inclination adjusters (6.1, 6.2) being arranged on both sides of a bracket (8) for fastening to the vehicle floor, the inclination adjusters (6.1, 6.2) having back rest-side fitting plates (9.2, 9.3) with annular projections (10.2, 10.3) which point towards one another, one annular projection (10.3) having a claw-like axial extension (11) which engages into a complementary axial recess of the opposite annular projection (10.2), the extension (11) having a certain play in the recess (12), with the result that the fitting plates (9.2, 9.3) can be adjusted independently of one another to a certain extent.

2. Vehicle seat according to Claim 1, **characterized in that** the means (11, 12) prevent the first segment (5) from being located in a position of use and the second segment (5') from being located in a stowage position.

3. Vehicle seat according to either of the preceding claims, **characterized in that** a seat belt (13) is fastened to the segment (5'), by means of which a vehicle occupant who is leaning against the segment (5) may be belted-up.

4. Vehicle seat according to one of the preceding claims, **characterized in that** it is a seat bench.

5. Vehicle seat according to Claim 4, **characterized in that** the seat bench comprises a back rest with a partition into a larger part (2) and a smaller part (2').

6. Vehicle seat according to Claim 5, **characterized in that** the segments (5, 5') are parts of the larger part (2).

## Revendications

1. Siège de véhicule (1) avec une partie d'assise (3) et un dossier en plusieurs parties (4), qui présente un premier segment (5) et un deuxième segment (5'), dans lequel ces segments (5, 5') sont respectivement munis d'un régulateur d'inclinaison (6.1, 6.2), **caractérisé en ce qu'**il présente un moyen (11, 12), qui limite l'inclinaison d'un segment (5') par rapport à l'autre segment (5) de sorte qu'un réglage du segment respectif (5, 5') indépendamment de l'autre soit possible pour améliorer le confort, **en ce que** toutefois un segment (5) ne peut être amené que conjointement avec l'autre segment (5') d'une position d'utilisation dans une position de rabattement et inversement, les régulateurs d'inclinaison (6.1, 6.2) fonctionnant selon le principe des cliquets d'arrêt, les régulateurs d'inclinaison (6.1, 6.2) étant disposés de chaque côté d'une patte (8) pour la fixation au sol du véhicule, les régulateurs d'inclinaison (6.1, 6.2) présentant des plaques de ferrure côté dossier (9.2, 9.3) avec des saillies annulaires (10.2, 10.3) tournées l'une vers l'autre, une saillie annulaire (10.3) présentant une saillie axiale (11) de type griffe qui vient en prise dans un évidement axial complémentaire de la saillie annulaire opposée (10.2), la saillie (11) ayant un certain jeu dans l'évidement (12), de telle sorte que les plaques de ferrure (9.2, 9.3) puissent être déplacées dans une certaine mesure indépendamment l'une de l'autre.

2. Siège de véhicule selon la revendication 1, **caractérisé en ce que** le moyen (11, 12) empêche que le premier segment (5) se trouve dans une position d'utilisation et le deuxième segment (5') dans une position de rabattement.

3. Siège de véhicule selon l'une quelconque des revendications précédentes, **caractérisé en ce qu'**une ceinture (13) est fixée au segment (5'), avec laquelle un occupant du véhicule, qui est appuyé sur le segment (5), peut s'attacher.

4. Siège de véhicule selon l'une quelconque des revendications précédentes, **caractérisé en ce qu'**il s'agit d'une banquette.

5. Siège de véhicule selon la revendication 4, **caractérisé en ce que** la banquette présente un dossier avec une division en une plus grande partie (2) et une plus petite partie (2').

6. Siège de véhicule selon la revendication 5, **caractérisé en ce que** les segments (5, 5') font partie de la plus grande partie (2).
